# EUROPÄISCHE PATENTANMELDUNG

(11) **EP 1 104 910 A1**
(43) Veröffentlichungstag der Anmeldung: **06.06.2001**
(21) Anmeldenummer: 99120940.4
(22) Anmeldetag: 02.11.1999
(51) Int. Cl.: G06K 19/077

(54) **Chipkarte und Verfahren zu deren Herstellung**

(71) Anmelder: Infineon Technologies AG, 81669 München (DE)
(72) Erfinder: Fries, Manfred, 94336 Hunderdorf (DE)
(74) Vertreter: Fischer, Volker, Dipl.-Ing.

(57) **Zusammenfassung**

Die Erfindung betrifft eine Chipkarte (7), in welcher ein Halbleiterchip mit auf einer Trägerschicht (1) ausgebildeten Kontaktflächen (5) elektrisch leitend kontaktiert und in einem Kartenkörper angeordnet ist. Der Kartenkörper wird durch ein auf der Trägerschicht (1) ausgebildetes, den Halbleiterchip und die elektrischen Kontakte abdeckendes, durch ein Moldverfahren hergestelltes einstückiges Gehäuse (4) gebildet. Die Erfindung betrifft auch ein Verfahren zur Herstellung der Chipkarte, insbesondere eines SIM-Moduls.

## Beschreibung

Die Erfindung betrifft eine Chipkarte und insbesondere ein SIM-Modul, welches in einem Mobiltelefon verwendet werden kann, sowie ein Verfahren zu deren Herstellung.

SIM-Module (SIM = Subscriber Identity Module) werden üblicherweise nach einem Verfahren hergestellt, das auch zur Herstellung von Standard-Chipkarten Verwendung findet. Als Träger des SIM-Moduls dient eine Kunststoffkarte, die GSM-Karte (GSM = Globales System für mobile Kommunikation). Diese GSM-Karte besitzt in der Regel ein genormtes Format, meist ISO-Format ID-1 mit einer Größe von 54 x 85,6 mm. In diesen GSM-Kartenkörper wird wie bei der Herstellung einer Standard-Chipkarte eine Kavität gefräst, in welche ein vorgefertigtes Chipkartenmodul eingesetzt wird. Dieses vorgefertigte Chipkartenmodul umfasst den GSM-Chip, welcher mit den ISO-Kontaktflächen des Moduls elektrisch leitend kontaktiert ist. Halbleiterchip und elektrische Kontakte werden durch Auftropfen einer Abdeckhaube aus Kunststoff, üblicherweise einem Epoxidharz, gegen Beschädigung geschützt.

Nach dem Implantieren des Chipkartenmoduls in die dafür vorgesehene Kavität des Kartenkörpers im ID-1-Format wird ein Stanzvorgang durchgeführt. Dabei wird die ID-1-Karte um den Halbleiterchip und die Kontaktflächen herum entlang des Außenumfangs des SIM-Moduls durchtrennt. Man läßt dabei jedoch zwischen dem SIM-Modul und dem restlichen Kartenkörper dünne Haltestege stehen, so dass das SIM-Modul weiter im es umgebenden Kartenkörper befestigt bleibt. Indem man die Haltestege durchbricht, kann das SIM-Modul leicht aus der GSM-Karte herausgetrennt werden. Wie die GSM-Karte weist auch das SIM-Modul üblicherweise genormte Abmessungen auf. Gängige Abmessungen entsprechen der Norm ID-000 mit den Maßen 25 x 15 mm, wobei eine der Ecken des Moduls abgeschrägt ist.

Das Implantieren des Chipkartenmoduls in die GSM-Karte und das Einstanzen der Konturen des SIM-Moduls erfolgen üblicherweise bei einem Kartenhersteller, der mit dem Hersteller des vorgefertigten Chipkartenmoduls in der Regel nicht identisch ist. Der gesamte Vorgang der Herstellung des SIM-Moduls, angefangen von der Herstellung des Chipkartenmoduls bis hin zum Einstanzen der Konturen des SIM-Moduls in die GSM-Karte, ist relativ arbeits- und kostenintensiv. Es wäre daher wünschenswert, ein einfacheres und kostengünstigeres Verfahren zur Hand zu haben. Außerdem wäre es hilfreich, wenn der gesamte Herstellungsprozess bei ein und demselben Hersteller erfolgen könnte.

**Aufgabe** der Erfindung ist es daher, eine Chipkarte, insbesondere ein SIM-Modul, anzugeben, welche einfach aufgebaut und mit einem kostengünstigen und einfachen Verfahren herstellbar sind. Das Verfahren sollte sich zudem nur solcher Verfahrensschritte bedienen, welche problemlos bei einem Hersteller von Halbleiterbauelementen und insbesondere von Chipkartenmodulen durchgeführt werden können.

Die Lösung dieser Aufgabe gelingt mit der Chipkarte gemäß Anspruch 1 sowie mit dem Verfahren gemäß Anspruch 6. Bevorzugte Ausführungsformen und Verfahrensvarianten sind den jeweiligen Unteransprüchen zu entnehmen.

In einem ersten Aspekt betrifft die Erfindung also eine Chipkarte, in welcher ein Halbleiterchip mit Kontaktflächen elektrisch leitend kontaktiert ist, welche auf einer Trägerschicht ausgebildet sind. Diese Kontaktflächen weisen zu einer der Oberflächen der Chipkarte, so dass sie vom Äußeren der Chipkarte her abgegriffen werden können. Die Ausbildung der Kontaktflächen entspricht grundsätzlich dem im Stand der Technik Üblichen. Die Kontaktflächen werden also in der Regel eine genormte Größe und Position aufweisen, üblicherweise also ISO-Norm entsprechen. Halbleiterchip und elektrisch leitende Kontakte sind in einem Kartenkörper angeordnet. In der erfindungsgemäßen Chipkarte besteht der Kartenkörper aus einem Gehäuse, welches einstückig durch ein Moldverfahren auf die Trägerschicht aufgebracht worden ist und Halbleiterchip sowie elektrische Kontakte vollständig abdeckt.

Unter einem Moldverfahren soll im Sinne der Erfindung und wie im Stand der Technik üblich ein Verfahren zur Herstellung eines Gehäuses verstanden werden, welches sich einer Gehäuseform (Moldform) bedient, deren Hohlraum mit einem Kunststoff ausgefüllt wird. Form und Größe des Gehäuses werden also durch die Ausbildung des Hohlraums in der Gehäuseform bestimmt, die während des Moldverfahrens eingesetzt wird. Derartige Moldverfahren finden bei der Herstellung von Gehäusen für auf Anschlussrahmen angeordnete Halbleiterchips im Stand der Technik breite Anwendung.

Das Moldverfahren, welches zur Herstellung der erfindungsgemäßen Chipkarte eingesetzt wird, wird dabei grundsätzlich auf im Stand der Technik übliche Weise angewendet, so dass hier die üblichen Moldwerkzeuge und Apparaturen verwendet werden können. Auch die Gehäusewerkstoffe entsprechen dem im Stand der Technik Üblichen. So können alle herkömmlicherweise bei Moldverfahren eingesetzten Duroplasten oder Thermoplasten verwendet werden.

Der Hohlraum des Moldwerkzeugs, welches zur Herstellung des Gehäuses der erfindungsgemäßen Chipkarte verwendet wird, wird durch die gewünschte Form des Kartenkörpers bestimmt. Durch Variation der Hohlraumgestaltung des verwendeten Moldwerkzeugs kann praktisch jeder beliebige Kartenkörper erzeugt werden. So kann dem Kartenkörper der erfindungsgemäßen Chipkarte beispielsweise die Form der gebräuchlichen GSM-Module gegeben werden, so insbesondere die der ID-000-Norm entsprechende Form eines SIM-Moduls.

Die Herstellung der erfindungsgemäßen Chipkarte kann ohne Schwierigkeiten beim Hersteller herkömmlicher Chipkartenmodule erfolgen, da bei der Kontaktierung von Halbleiterchip und Kontaktflächen und der anschließenden Herstellung des Kartenkörpers durch ein Moldverfahren ausschließlich Herstellungsschritte und Werkzeuge eingesetzt werden, die beim Modulhersteller ohnehin gebräuchlich sind. Dagegen entfallen diejenigen Herstellungsschritte, die üblicherweise bei einem Chipkartenhersteller vorgenommen werden. Insbesondere entfällt der Implantierungsschritt eines vorgefertigten Chipkartenmoduls in eine GSM-Karte, und auch die anschließenden Stanzvorgänge sind nicht länger erforderlich. Bei der Erfindung wird vielmehr unmittelbar aus der Vorstufe des mit den Kontaktflächen kontaktierten Halbleiterchips die fertige Chipkarte mit der gewünschten Form des Kartenkörpers erhalten. Hinsichtlich der Form des Kartenkörpers und der hierfür verwendeten Materialien erlaubt die Erfindung zudem eine große Vielfalt.

Da bei der Herstellung der erfindungsgemäßen Chipkarte die gesamte Grundfläche des Kartenkörpers für eine Bestückung zur Verfügung steht, können problemlos auch mehrere Halbleiterchips auf der Trägerschicht angeordnet und anschließend in einem Moldverfahren mit dem Kartenkörper-Gehäuse umgeben werden. Bei dem herkömmlichen Herstellungsverfahren dagegen ist die Fläche, die zur Anbringung von Halbleiterchips zur Verfügung steht, durch die Fläche des vorgefertigten Chipkartenmoduls begrenzt. Diese Fläche des Chipkartenmoduls ist zwangsläufig immer kleiner als die Fläche des Kartenkörpers, in die das Modul später implantiert wird. Vergrößerungen der Fläche des Chipkartenmoduls bedingen zwingend immer auch Änderungen im Weiterverarbeitungsverfahren beim Chipkartenhersteller, da die Größe der in den Kartenkörper gefrästen Kavität zur Aufnahme des Chipkartenmoduls der Form des Chipkartenmoduls angepasst werden muss. Die Erfindung bietet hier also erheblich bessere Variationsmöglichkeiten bei minimalem Zusatzaufwand.

In der fertigen erfindungsgemäßen Chipkarte weist die Trägerschicht, auf welcher die Kontaktflächen ausgebildet sind, zweckmäßig denselben Außenumriss auf wie das benachbarte Gehäuse. Bei der Herstellung der erfindungsgemäßen Chipkarte ist die Trägerschicht aus fertigungstechnischen Gründen vorteilhafterweise jedoch zunächst größer als die Grundfläche des Kartenkörper-Gehäuses, auch wenn dies nicht zwingend notwendig ist. Zweckmäßig wird die überstehende Trägerschicht erst nach Fertigstellung des Gehäuses entfernt. Anspruch 1 umfasst insofern die Vorstufe vor dem Entfernen der überstehenden Trägerschicht mit.

Es ist ebenfalls möglich, in die Trägerschicht eine Öffnung einzubringen, so dass die Oberfläche des Kartenkörper-Gehäuses in diesem Bereich frei liegt. Diese Öffnung in der Trägerschicht, die nachfolgend auch als Fenster bezeichnet wird, kann als Kennzeichnungs- oder Beschriftungsfläche für die erfindungsgemäße Chipkarte verwendet werden. Auch die der Trägerschicht abgewandte Rückseite des Kartenkörper-Gehäuses kann beschriftet oder gekennzeichnet werden. Hierzu können herkömmliche Druck- oder Lasertechniken eingesetzt werden.

Die Herstellung der erfindungsgemäßen Chipkarte erfolgt zweckmäßig nach dem Verfahren, welches in Anspruch 6 beschrieben ist und nachfolgend erläutert werden soll:

Zunächst werden die elektrisch leitenden Kontakte zwischen Halbleiterchip und den Kontaktflächen ausgebildet, die auf einer Trägerschicht ausgebildet sind. Als Ausgangsmaterialien können dabei die im Stand der Technik üblicherweise zur Herstellung von Chipkartenmodulen verwendeten Materialien eingesetzt werden. So sind beispielsweise vorgefertigte Trägerschichten aus Kunststoff erhältlich, in welche die Kontaktflächen bereits eingearbeitet sind. Diese Kontaktflächen entsprechen üblicherweise ISO-Standard.

Als Trägerschicht sind verschiedenste Kunststoffe geeignet. Gängig sind z.B. Kunststofffolien auf Epoxid-Basis, welche glasfaserverstärkt sind (auch als "Glasepoxy" bezeichnet). Die Trägerschichten mit eingearbeiteten ISO-Kontaktflächen liegen meist in Form von Trägerbändern vor, an deren Längskanten Transportöffnungen vorgesehen sind. Diese Trägerbänder, auf denen eine Vielzahl von ISO-Kontaktflächen-Blöcken in Reihe hintereinander angeordnet ist, erlauben eine kontinuierliche maschinelle Bestückung und Weiterverarbeitung bei der Chipmodulfertigung. Ein derartiges kontinuierliches maschinelles Verfahren ist auch bei der Erfindung bevorzugt.

Das Aufsetzen der Halbleiterchips und die Herstellung der elektrisch leitenden Kontakte zu den Kontaktflächen auf der Trägerschicht geschieht auf im Stand der Technik übliche Weise. Beispielsweise kann die Kontaktierung mit Hilfe von Bonddrähten oder in Flip-Chip-Technik mittels Lots oder elektrisch leitfähigen Klebstoffs durchgeführt werden. Metallische Anschlussrahmen sind weder zur Kontaktierung noch Versteifung der erfindungsgemäßen Chipkarte notwendig.

Der Verbund aus Trägerschicht, Kontaktflächen und mit diesen kontaktiertem Halbleiterchip wird nun in einer Moldform angeordnet, deren Hohlraum der Form des Kartenkörpers entsprechend ausgebildet ist. Der Hohlraum der Moldform wird mit einem Kunststoff ausgefüllt. Dadurch wird ein auf der Trägerschicht angeordnetes, den Halbleiterchip und die elektrisch leitenden Kontakte vollständig abdeckendes, einstückiges Gehäuse erhalten.

Das Moldverfahren kann auf im Stand der Technik übliche Weise durchgeführt werden, wobei auch die üblichen Thermoplasten oder Duroplasten als Gehäusewerkstoff verwendet werden können.

Nach dem Entfernen aus der Moldform steht seitlich des soeben erzeugten Gehäuses noch die Trägerschicht über. Bei einem kontinuierlichen Verfahren unter Einsatz des eingangs beschriebenen Trägerbandes werden mehrere hintereinander auf dem Trägerband aufgereihte Chipkarten erhalten. Vereinzelte Chipkarten erhält man, indem man die Trägerschicht durchtrennt. Zweckmäßig geschieht das entlang des Außenumfangsrandes des Gehäuses, insbesondere unter Verwendung eines Stanzvorgangs.

Möchte man auf der Vorderseite der Chipkarte ein Fenster zum Beschriften erzeugen, erreicht man dies zweckmäßig dadurch, dass man vor dem Kontaktierungsschritt von Halbleiterchip und Kontaktflächen in die Trägerschicht in demjenigen Bereich, in welchem im nachfolgenden Moldschritt ein Gehäuse erzeugt werden soll, eine Öffnung einbringt. Auch dies geschieht zweckmäßig durch Stanzen. Dabei sollten die in der Trägerschicht ausgebildeten Kontaktflächen selbstverständlich nicht beschädigt werden.

Wie bereits erwähnt, eröffnet das erfindungsgemäße Verfahren die Möglichkeit, auch mehrere Halbleiterchips in die erfindungsgemäße Chipkarte zu integrieren. Zur Anbringung der Halbleiterchips steht dabei die gesamte Fläche der Trägerschicht zur Verfügung, auf welcher im nachfolgenden Moldschritt das Gehäuse aufgebracht wird.

Je nach Ausgestaltung der Moldform können dabei praktisch beliebig geformte Kartenkörper erzeugt werden. Besonders geeignet ist das erfindungsgemäße Verfahren zur Herstellung relativ kleiner Kartenkörper, wie beispielsweise SIM-Modulen und insbesondere solchen der Norm ID-000.

Nach der Erzeugung des Gehäuses im Moldverfahren kann die Gehäuseoberfläche im rückseitigen, der Trägerschicht abgewandten Bereich und/oder in dem Bereich der vorderseitigen Oberfläche des Gehäuses, in welcher ein Fenster vorhanden ist, auf übliche Weise beschriftet oder gekennzeichnet werden. Geeignet sind die herkömmlichen Druckverfahren oder Lasermarkierung. Die Kennzeichnung der Chipkarten geschieht zweckmäßig, solange sie noch in der Trägerschicht befestigt sind, also vor dem Vereinzeln der Chipkarten.

Um die Handhabung der vereinzelten Chipkarten zu erleichtern, können diese in einen Träger eingesetzt werden. Geeignete Verpackungsträger sind beispielsweise solche aus Kunststoff oder Pappe, in welchen die Chipkarte lösbar befestigt wird. Hierzu kann beispielsweise eine Kavität in dem Verpackungsträger erzeugt werden, in welche die Chipkarte eingesetzt wird. Die Verpackungsträger können die Form herkömmlicher GSM-Karten erhalten, auf übliche Weise beschriftet werden und so als Informations- oder Werbeträger dienen.

Die Erfindung soll nachfolgend anhand einer Zeichnung näher erläutert werden. Darin zeigen schematisch:
- Fig. 1a: ein Zwischenprodukt des erfindungsgemäßen Verfahrens in Draufsicht;
- Fig. 1b: das Zwischenprodukt gemäß Fig. 1a von der rückwärtigen Seite aus betrachtet;
- Fig. 2: eine perspektivische Ansicht einer erfindungsgemäßen Chipkarte und
- Fig. 3: die Chipkarte gemäß Fig. 2 in einem Verpackungsträger befestigt in Draufsicht.

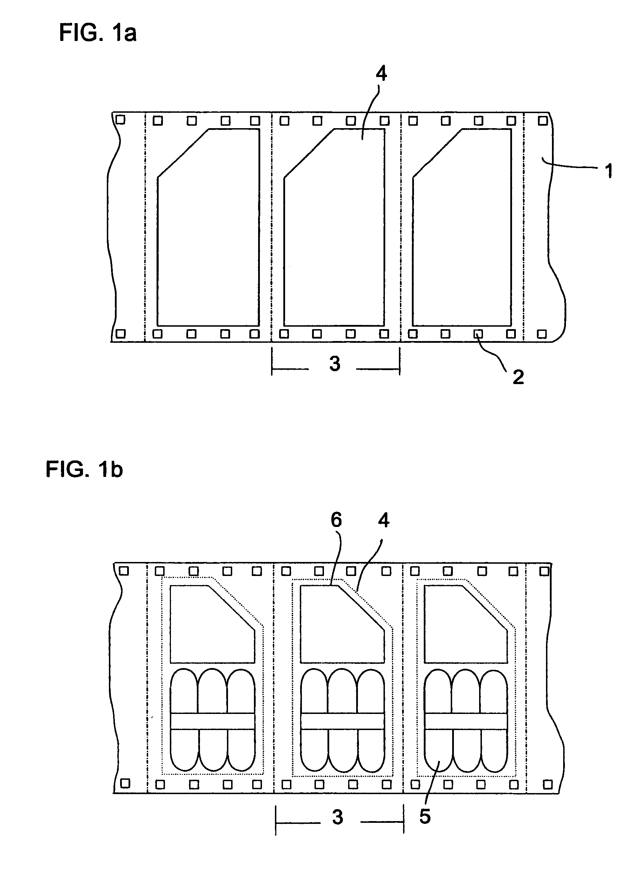

Fig. 1 soll das erfindungsgemäße Verfahren am Beispiel der Herstellung von SIM-Modulen erläutern. Als eines der Ausgangsmaterialien im erfindungsgemäßen Verfahren dient eine Trägerschicht 1, hier in Form eines Trägerbandes, welches beispielsweise aus Glasepoxy besteht. Das hier verwendete Trägerband besitzt eine Breite von 35 mm. An beiden Längskanten sind Transportöffnungen 2 ausgebildet, die jeweils einen Abstand von 4,75 mm zueinander aufweisen. Für die Fertigung von SIM-Modulen mit einer Kantenlänge von 25 x 15 mm wird das Trägerband 1 in aufeinanderfolgende Teilabschnitte 3 eingeteilt, die jeweils eine Länge von 19 mm aufweisen, was vier Transportöffnungen 2 pro Längskante eines Abschnitts 3 entspricht.

In jedem dieser Teilabschnitte 3 ist ein Block von Kontaktflächen 5 nach ISO-Standard ausgebildet (Fig. 1b). Diese ISO-Kontaktflächen 5 sind jeweils mit einem Halbleiterchip elektrisch leitend kontaktiert (nicht dargestellt). Um diesen Halbleiterchip und die elektrisch leitenden Kontakte herum wird auf dem Trägerband 1 durch ein Moldverfahren ein Gehäuse 4 erzeugt, dessen Abmessungen dem Format ID-000 eines SIM-Moduls entsprechen. Fig. 1a zeigt die Gehäuse 4, welche auf dem Trägerband 1 angeordnet sind.

Fig. 1b zeigt diese Anordnung von der rückwärtigen Seite aus betrachtet. Die Konturen der Gehäuse 4, die hinter dem Trägerband 1 liegen, sind durch gestrichelte Linien angedeutet. In Fig. 1b ist zu erkennen, dass benachbart zu den Kontaktflächen 5 in der Trägerschicht 1 in jedem Teilabschnitt 3 ein Fenster 6 vorhanden ist. Diese Fenster sind noch vor der Kontaktierung der Halbleiterchips mit den ISO-Kontaktflächen 5 in das Trägerband 1 eingestanzt worden. Im Bereich der Fenster 6 können die Chipkarten gekennzeichnet werden, was zweckmäßig durch einen Druckvorgang oder eine Lasermarkierung geschieht, noch bevor die einzelnen Chipkarten aus dem Trägerband 1 herausgelöst werden. Das Vereinzeln der Chipkarten erfolgt zweckmäßig, indem das Trägerband entlang des Außenumrisses der Gehäuse 4, also entlang der gestrichelten Linie in Fig. 1b, durchstanzt wird.

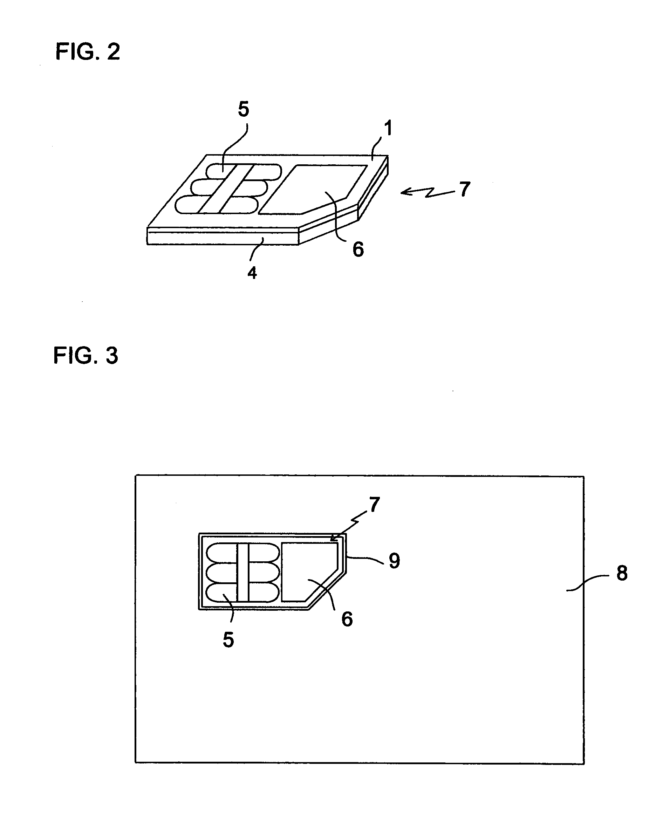

Fig. 2 zeigt eine vereinzelte Chipkarte 7 mit dem Kartenkörper 4, auf dessen Oberfläche sich die Trägerschicht 1 mit den ISO-Kontaktflächen 5 und dem eingestanzten Fenster 6 befindet.

Zur besseren Handhabung kann die Chipkarte 7 lösbar in einem Verpackungsträger befestigt sein. Dies ist in Fig. 3 dargestellt. Die Chipkarte 7 ist in eine Kavität 9 eingesetzt, die in einen Verpackungsträger (Carrier) 8 eingefräst ist. Der Carrier 8 kann die Form einer herkömmlichen GSM-Karte im ID-1-Format aufweisen, aus PVC oder anderen gebräuchlichen Trägermaterialien bestehen und beschriftet sein.

## Patentansprüche

1. Chipkarte (7), in welcher ein Halbleiterchip mit auf einer Trägerschicht (1) ausgebildeten, zu einer der Oberflächen der Chipkarte weisenden Kontaktflächen (5) elektrisch leitend kontaktiert und in einem Kartenkörper angeordnet ist, **dadurch gekennzeichnet,**
dass der Kartenkörper ein auf der Trägerschicht (1) ausgebildetes, den Halbleiterchip und die elektrischen Kontakte vollständig abdeckendes, durch ein Moldverfahren hergestelltes einstückiges Gehäuse (4) ist.

2. Chipkarte gemäß Anspruch 1,
**dadurch gekennzeichnet,**
dass Trägerschicht (1) und Gehäuse (4) denselben Außenumriss aufweisen.

3. Chipkarte gemäß Anspruch 1 oder 2,
**dadurch gekennzeichnet,**
dass die Trägerschicht (1) eine die Oberfläche des Gehäuses (4) teilweise freilassende Öffnung (9) aufweist.

4. Chipkarte gemäß einem der Ansprüche 1 bis 3,
**dadurch gekennzeichnet,**
dass sie mehrere Halbleiterchips aufweist.

5. Chipkarte gemäß einem der Ansprüche 1 bis 4, nämlich SIM-Modul für ein Mobiltelefon.

6. Verfahren zur Herstellung einer Chipkarte gemäß einem der Ansprüche 1 bis 5,
**dadurch gekennzeichnet,**
dass es die folgenden Schritte umfasst:
a) Herstellen elektrisch leitender Kontakte zwischen Halbleiterchip und auf einer Trägerschicht (1) ausgebildeten Kontaktflächen (5);
b) Anordnen des mit den Kontaktflächen (5) elektrisch leitend kontaktierten Halbleiterchips in einer Moldform und Ausfüllen des Hohlraums der Moldform mit einem Kunststoff, so dass ein auf der Trägerschicht (1) ausgebildetes, den Halbleiterchip und die elektrisch leitenden Kontakte vollständig abdeckendes, einstückiges Gehäuse (4) erhalten wird; und
c) Heraustrennen der Chipkarte (7) aus der Trägerschicht (1).

7. Verfahren gemäß Anspruch 6,
**dadurch gekennzeichnet,**
dass vor Schritt a) in die Trägerschicht (1) im Bereich der Chipkarten-Oberfläche und außerhalb der Kontaktflächen (5) eine Öffnung (6) eingebracht, insbesondere eingestanzt, wird.

8. Verfahren gemäß Anspruch 6 oder 7,
**dadurch gekennzeichnet,**
dass in Schritt a) mehrere Halbleiterchips mit den Kontaktflächen (5) kontaktiert werden.

9. Verfahren gemäß einem der Ansprüche 6 bis 8,
**dadurch gekennzeichnet,**
dass der Hohlraum der Moldform in Schritt b) der Form eines SIM-Moduls entsprechend ausgebildet ist.

10. Verfahren gemäß einem der Ansprüche 6 bis 9,
**dadurch gekennzeichnet,**
dass in Schritt c) die Trägerschicht (1) entlang des Außenumfangsrandes des Gehäuses (4) durchtrennt, insbesondere durchgestanzt, wird.

11. Verfahren gemäß einem der Ansprüche 6 bis 10,
**dadurch gekennzeichnet,**
dass die der Trägerschicht (1) abgewandte Oberfläche des Gehäuses (4) und/oder die Oberfläche des Gehäuses (4) im Bereich der Öffnung (6) in der Trägerschicht (1), insbesondere durch Bedrucken oder durch Lasermarkierung, gekennzeichnet wird.

12. Verfahren gemäß einem der Ansprüche 6 bis 11,
**dadurch gekennzeichnet,**
dass als Trägerschicht (1) ein Trägerband zur Herstellung einer Vielzahl aufeinanderfolgender Chipkarten (7) verwendet wird.

13. Verfahren gemäß einem der Ansprüche 6 bis 12,
**dadurch gekennzeichnet,**
dass die Chipkarte (7) im Anschluss an Schritt c) lösbar in die Kavität (9) eines Verpackungsträgers (8) eingesetzt wird.
